(19) Europäisches Patentamt
European Patent Office
Office européen des brevets

(11) EP 2 840 102 B1

(12) **EUROPEAN PATENT SPECIFICATION**

(45) Date of publication and mention of the grant of the patent:
**30.08.2017 Bulletin 2017/35**

(21) Application number: **13778636.4**

(22) Date of filing: **18.04.2013**

(51) Int Cl.:
***C08G 64/02*** *(2006.01)* ***C08G 63/64*** *(2006.01)*

(86) International application number:
**PCT/JP2013/062145**

(87) International publication number:
**WO 2013/157661 (24.10.2013 Gazette 2013/43)**

(54) **COPOLYCARBONATE**

COPOLYCARBONAT

COPOLYCARBONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:
**18.04.2012 JP 2012094767**
**13.06.2012 JP 2012133901**
**12.09.2012 JP 2012200618**
**05.02.2013 JP 2013020494**

(43) Date of publication of application:
**25.02.2015 Bulletin 2015/09**

(60) Divisional application:
**15199396.1 / 3 018 162**

(73) Proprietor: **Teijin Limited**
**Osaka-shi, Osaka 541-0054 (JP)**

(72) Inventors:
- **MOTOYOSHI Tetsuya**
**Tokyo 100-0013 (JP)**
- **IMAZATO Kenta**
**Tokyo 100-0013 (JP)**
- **YAMANAKA Katsuhiro**
**Tokyo 100-0013 (JP)**

(74) Representative: **Beckmann, Claus**
**Kraus & Weisert**
**Patentanwälte PartGmbB**
**Thomas-Wimmer-Ring 15**
**80539 München (DE)**

(56) References cited:
**EP-A1- 1 752 482**
**JP-A- 2003 113 237**
**JP-A- 2003 292 603**
**JP-A- 2004 247 274**
**JP-A- 2011 079 899**
**JP-A- 2011 105 846**
**JP-A- 2012 072 350**
**JP-A- 2012 214 728**
**US-A1- 2009 105 393**

Remarks:
The file contains technical information submitted after the application was filed and not included in this specification

EP 2 840 102 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### TECHNICAL FIELD

The present invention relates to a copolycarbonate which has a low water absorption coefficient and is excellent in heat resistance, low-temperature characteristics and surface hardness.

### BACKGROUND ART

Biomass resources which do not depend on oil as a raw material and realize carbon neutral that they do not increase the amount of carbon dioxide even when they are burnt are attracting a lot of attention due to problems such as concerns over the depletion of oil resources and an increase in the amount of carbon dioxide in air which causes global warming. In the field of polymers, the development of biomass plastics produced from the biomass resources is now actively under way.

A typical example of the biomass plastics is polylactic acid. The polylactic acid has relatively high heat resistance and mechanical properties among the biomass plastics. Therefore, its use is spreading to dishes, packaging materials and miscellaneous goods, and further the potential of using it as an industrial material is now under study.

However, for use of the polylactic acid as an industrial material, its heat resistance is unsatisfactory and when a molded article thereof is to be obtained by injection molding having high productivity, it is inferior in moldability as its crystallinity is low as a crystalline polymer.

A polycarbonate which is produced from a raw material obtained from an ether diol residue able to be produced from sugar is under study as an amorphous polycarbonate obtained from a biomass resource and having high heat resistance. Especially, studies are being made to use isosorbide as a monomer so as to incorporate it into a polycarbonate.

There is proposed a copolycarbonate having excellent heat resistance and moldability which is prepared by copolymerizing isosorbide with an aliphatic diol (Patent Document 1 and Patent Document 2). However, since 1,3-propanediol, 1,4-butaneidol, 1,6-hexanediol or alicyclic diol is used as the aliphatic diol in this copolycarbonate, there is limitation to use of the copolycarbonate in cold districts due to physical properties at a low temperature, for example, low impact strength. Further, since this copolycarbonate has a high water absorption coefficient, a dimensional change or warp occurs in a molded article thereof by water absorption.

There is also proposed a copolycarbonate obtained from isosorbide and 1,8-octanediol (Patent Document 3). However, this copolycarbonate has a low glass transition temperature of 68°C. Therefore, the development of a copolycarbonate which is obtained from a biomass resource and excellent in heat resistance, low-temperature characteristics, low water absorption and surface hardness is desired.

Meanwhile, there are proposed polyesters of isosorbide and a dicarboxylic acid. Only polyesters having an extremely low content of isosorbide and a low molecular weight are obtained (Patent Documents 4 and 5). Although there is proposed a copolymer of isosorbide and polylactic acid, it has low heat resistance. This copolymer has low productivity as polymers obtained by polymerizing isosorbide and lactic acid independently are reacted with each other by using a solvent (Patent Document 6).

### Prior Art Documents

| | |
|---|---|
| (Patent Document 1) | WO2004/111106 |
| (Patent Document 2) | JP-A 2008-24919 |
| (Patent Document 3) | JP-A 2003-292603 |
| (Patent Document 4) | JP-B 2002-512268 |
| (Patent Document 5) | JP-A 2001-180591 |
| (Patent Document 6) | WO2005/116110 |

JP 2003 292603 A relates to the problem to provide a thermoplastic molding material that reduces the effect on global warming, even when it is incinerated. As a solution to the problem, the document describes a thermoplastic molding material which contains a polycarbonate compound represented by the following formula (wherein R is at least one diol selected from 2-8C aliphatic diols, m is an integer of 1-5,000, and n is an integer of 0-5,000).

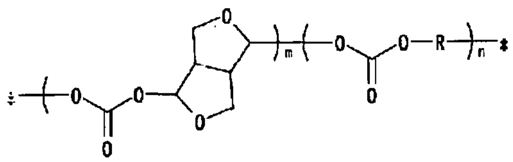

JP 2011 105846 A relates to the problem to provide a polycarbonate resin composition including at least a structural unit derived from a dihydroxy compound such as isosorbide and having good heat resistance, transparency, mechanical strength and excellent moldability; and a molded article thereof. As a solution to the problem, the document describes a polycarbonate resin composition which includes 100 parts by weight of a polycarbonate resin (a) comprising a structural unit derived from a dihydroxy compound having a site represented by the following general formula (1), 0.0001-2 parts by weight of at least one mold release agent (b) selected from the group consisting of a higher fatty acid and stearic acid ester, excluding that having a moiety represented by formula (1) which is a part of -$CH_2$-O-H.

$$-\left( CH_2-O \right)- \qquad (1)$$

EP 1 752 482 A1 relates to the problem to provide an aliphatic polyester copolymer which is excellent in heat resistance while having a practically adequate mechanical properties and properties in a molten state thereof. As a solution to the problem, the document describes an aliphatic polyester copolymer comprising an aliphatic carbonate unit (a) and an aliphatic polyester unit (b), and a molded body composed of said aliphatic polyester copolymer.

US 2009/105393 A1 describes an isosorbide-based polycarbonate polymer comprising: an isosorbide unit, an aliphatic unit derived from a C14-44 aliphatic diacid, C14-44 aliphatic diol, or combination of these; and optionally, an additional unit different from the isosorbide and aliphatic units, wherein the isosorbide unit, aliphatic unit, and additional unit are each carbonate, or a combination of carbonate and ester units. Also disclosed are a thermoplastic composition and an article comprising the isosorbide-based polycarbonate.

DISCLOSURE OF THE INVENTION

It is an object of the present invention to provide a copolycarbonate which has a low water absorption coefficient and is excellent in heat resistance, low-temperature characteristics and surface hardness.

The inventors of the present invention found that when isosorbide is copolymerized with a long-chain diol having 8 to 12 carbon atoms, a copolycarbonate which has a low water absorption coefficient and is excellent in heat resistance, low-temperature characteristics and surface hardness is obtained. The present invention was accomplished based on this finding.

That is, the present invention provides the copolycarbonate according to claim 1 as well as a molded article obtained therefrom. Preferred embodiments are described in claims 2 and 3.

BEST MODE FOR CARRYING OUT THE INVENTION

The present invention will be described in detail hereinunder.

(unit (A))

The unit (A) is derived from an aliphatic diol having an ether group. A polycarbonate containing the unit (A) has excellent heat resistance and high pencil hardness. Examples of the unit (A) include units (A1), (A2) and (A3) which are represented by the following formulas and stereoisomeric to one another.

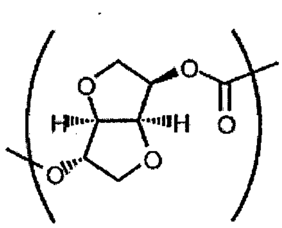

(A1)

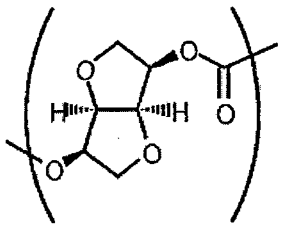

(A 2)

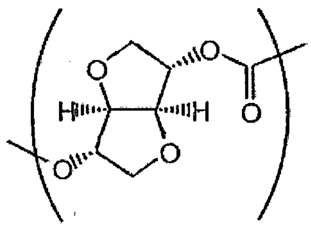

(A 3)

The units (A1), (A2) and (A3) are units derived from sugar-derived ether diols, obtained from the biomass of the natural world and called "renewable resources". The units (A1), (A2) and (A3) are derived from isosorbide, isommanide and isoidide, respectively. Isosorbide is obtained by hydrogenating D-glucose obtained from starch and dehydrating the obtained product. The other ether diols are obtained from similar reactions to the above reaction except for the starting material. The unit (A1) derived from isosorbide (1,4:3,6-dianhydro-D-sorbitol) out of isosorbide, isomannide and isoidide is particularly preferred because it is easily produced and has excellent heat resistance.

<copolycarbonate (1): random polymer>

The inventors found that when a monomer having a long-chain diol with 8 to 12 carbon atoms is used as a monomer to be copolymerized with isosorbide, a copolycarbonate having a low water absorption coefficient and excellent low-temperature impact characteristics is obtained.

The copolycarbonate (1) contains a unit (A) as described above and a unit (B1) represented by the following formula as main recurring units, and the (A/B1) molar ratio of the unit (A) and the unit (B1) is 80/20 to 95/5.

(unit (B1))

The unit (B1) is represented by the following formula.

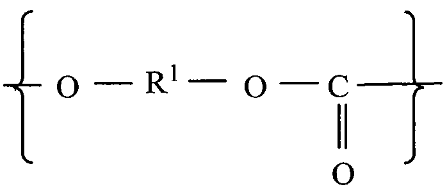

(B1)

In the above formula, $R^1$ is an alkylene group having 8 to 12 carbon atoms, which may be substituted by an aromatic group having 6 to 12 carbon atoms.

Examples of the alkylene group having 8 to 12 carbon atoms include octamethylene group, nonamethylene group, decamethylene group, undecamethylene group and dodecamethylene group. Examples of the aromatic group having 6 to 12 carbon atoms as a substitute include phenyl group and tolyl group.

The unit (B1) in the copolycarbonate (1) is derived from an aliphatic diol having 8 to 12 carbon atoms.

Examples of the aliphatic diol having 8 to 12 carbon atoms include 1,8-octanediol, 1,9-nonanediol, 1,10-decanediol, 1,12-decanediol, 2,4-dethyl-1,5-pentanediol and 2-methyl-1,8-octanediol. Out of these, 1,8-octanediol, 1,9-nonanediol, 1,10-decanediol and 1,12-dodecanediol are preferred, and 1,9-nonanediol, 1,10-decanediol and 1,12-dodecanediol are more preferred. They may be used in combination of two or more.

(composition)

The main recurring units of the copolycarbonate (1) consist of the unit (A) and the unit (B1). The expression "main" means that the total content of these units is preferably 60 mol%, more preferably 70 mol%, much more preferably 80 mol% based on the total of all the recurring units.
The (A/B1) molar ratio of the unit (A) and the unit (B1) in the copolycarbonate (1) is 80/20 to 95/5. When the molar ratio falls within this range, the copolycarbonate has high pencil hardness and heat resistance and very low water absorption. The (A/B1) molar ratio is preferably 82/18 to 93/7, more preferably 84/16 to 92/8. When the (A/B) molar ratio is lower than 80/20, heat resistance degrades and the (A/B) molar ratio is higher than 95/5, the water absorption coefficient becomes high and flowability degrades. The (A/B) molar ratio can be calculated by measuring with the proton NMR of JNM-AL400 of JEOL Ltd.

(another comonomer)

As the other comonomer may be used another aliphatic diol, alicyclic diol or aromatic dihydroxy compound, as exemplified by diol compounds, and oxyalkylene glycols such as diethylene glycol, triethylene glycol, tetraethylene glycol and polyethylene glycol described in WO2004/111106 and WO2011/021720.
Examples of the other aliphatic diol include
1,3-propanediol, 1,4-butanediol, 1,5-pentanediol,
1,6-hexanediol, 2-methyl-1,3-propanediol, neopentyl glycol and 3-methyl-1,5-pentanediol.
Examples of the alicyclic diol include
2-methyl-1,3-cyclobutanediol,
2,4-dimethyl-1,3-cyclobutanediol,
2,2,4,4-tetramethyl-1,3-cyclobutanediol,
2-ethyl-1,3-cyclobutanediol,
2,4-diethyl-1,3-cyclobutanediol,
2,2,4,4-tetraethyl-1,3-cyclobutanediol,
2-butyl-1,3-cyclobutanediol,
2,4-dibutyl-1,3-cyclobutanediol,
2,2,4,4-tetrabutyl-1,3-cyclobutanediol,
1,2-cyclohexanediol, 1,3-cyclohexanediol,
1,4-cyclhexanediol, cyclohexane dimethanol, tricyclodecane dimethanol, adamantane diol, pentacyclopentadecane dimethanol and
3,9-bis(2-hydroxy-1,1-dimethylethyl)-2,4,8,10-tetraoxaspiro[5.5]undecane.
Examples of the aromatic dihydroxy compound include
$\alpha$, $\alpha$'-bis(4-hydroxyphenyl)-m-diisopropylbenzene (bisphenol M), 9,9-bis(4-hydroxyphenyl)fluorene,
1,1-bis(4-hydroxyphenyl)cyclohexane,
1,1-bis(4-hydroxyphenyl)-3,3,5-trimethylcyclohexane,
4, 4'-dihydroxy-3, 3'-dimethyldiphenyl sulfide, bisphenol A,
2,2-bis(4-hydroxy-3-methylphenyl)propane (bisphenol C),
2,2-bis(4-hydroxyphenyl)-1,1,1,3,3,3-hexafluoropropane (bisphenol AF) and 1,1-bis(4-hydroxyphenyl)decane.

<production process of copolycarbonate (1)>

The copolycarbonate (1) can be produced by reacting a diol with a carbonate precursor such as a diester carbonate.
A transesterification reaction using a diester carbonate as the carbonate precursor is carried out by stirring an aromatic dihydroxy component and the diester carbonate in a predetermined ratio under heating in an inert gas atmosphere and distilling off the formed alcohol or phenol. The reaction temperature which differs according to the boiling point of the formed alcohol or phenol is generally 120 to 300°C. The reaction is completed while the formed alcohol or phenol is distilled off by setting a reduced pressure from the beginning. An end sealing agent and an antioxidant may be added as required.
The diester carbonate used in the above transesterification reaction is an ester such as an aryl group or aralkyl group having 6 to 12 carbon atoms which may be substituted. Specific examples thereof include diphenyl carbonate, ditolyl carbonate, bis(chlorophenyl)carbonate and m-cresyl carbonate. Out of these, diphenyl carbonate is particularly preferred. The amount of diphenyl carbonate is preferably 0.97 to 1.10 moles, more preferably 1.00 to 1.06 moles based

on 1 mole of the total of the dihydroxy compounds.

To increase the polymerization rate in the melt polymerization method, a polymerization catalyst may be used. The polymerization catalyst is selected from an alkali metal compound, an alkali earth metal compound, a nitrogen-containing compound and a metal compound.

As the above compounds, organic acid salts, inorganic salts, oxides, hydroxides, hydrides, alkoxides and quaternary ammonium hydroxides of an alkali metal or an alkali earth metal are preferably used. These compounds may be used alone or in combination.

Examples of the alkali metal compound include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium benzoate, potassium benzoate, cesium benzoate, lithium benzoate, dibasic sodium phosphate, dibasic potassium phosphate, dibasic lithium phosphate, disodium phenylphosphate, disodium salts, dipotassium salts, dicesium salts and dilithium salts of bisphenol A, and sodium salts, potassium salts, cesium salts and lithium salts of phenol.

Examples of the alkali earth metal compound include magnesium hydroxide, calcium hydroxide, strontium hydroxide, barium hydroxide, magnesium carbonate, calcium carbonate, strontium carbonate, barium carbonate, magnesium diacetate, calcium diacetate, strontium diacetate and barium diacetate.

Examples of the nitrogen-containing compound include quaternary ammonium hydroxides having an alkyl or aryl group such as tetramethylammonium hydroxide, tetraethylammonium hydroxide, tetrapropylammonium hydroxide, tetrabutylammonium hydroxide and trimethylbenzylammonium hydroxide. Tertiary amines such as triethylamine, dimethylbenzylamine and triphenylamine, and imidazoles such as 2-methylimidazole, 2-phenylimidazole and benzimidazole may be used. Bases and basic salts such as ammonia, tetramethylammonium borohydride, tetrabutylammonium borohydride, tetrabutylammonium tetraphenylborate and tetraphenylammonium tetraphenylborate may also be used.

Examples of the metal compound include zinc aluminum compounds, germanium compounds, organic tin compounds, antimony compounds, manganese compounds, titanium compounds and zirconium compounds. These compounds may be used alone or in combination of two or more.

The amount of the polymerization catalyst is preferably $1 \times 10^{-9}$ to $1 \times 10^{-2}$ equivalent, more preferably $1 \times 10^{-8}$ to $1 \times 10^{-5}$ equivalent, much more preferably $1 \times 10^{-7}$ to $1 \times 10^{-3}$ equivalent based on 1 mole of the diol component.

A catalyst deactivator may be added in the latter stage of the reaction. Known catalyst deactivators are used effectively as the catalyst deactivator. Out of these, ammonium salts and phosphonium salts of sulfonic acid are preferred. Salts of dodecylbenzenesulfonic acid such as tetrabutylphosphonium salts of dodecylbenzenesulfonic acid and salts of paratoluenesulfonic acid such as tetrabutylammonium salts of paratoluenesulfonic acid are more preferred.

As the ester of sulfonic acid, methyl benzenesulfonate, ethyl benzenesulfonate, butyl benzenesulfonate, octyl benzenesulfonate, phenyl benzenesulfonate, methyl paratoluenesulfonate, ethyl paratoluenesulfonate, butyl paratoluenesulfonate, octyl paratoluenesulfonate and phenyl paratoluenesulfonate are preferably used. Out of these, tetrabutylphosphonium salts of dodecylbenzenesulfonic acid are most preferably used.

When at least one polymerization catalyst selected from alkali metal compounds and/or alkali earth metal compounds is used, the amount of the catalyst deactivator is preferably 0.5 to 50 moles, more preferably 0.5 to 10 moles, much more preferably 0.8 to 5 moles based on 1 mole of the polymerization catalyst.

<characteristic properties of copolycarbonate (1)>

The copolycarbonate (1) satisfies requirements (i) to (v) as defined in claim 1.

Since the copolycarbonate (1) contains isosorbide and a long-chain diol, it has excellent heat resistance, high surface hardness, excellent low-temperature impact characteristics and a low water absorption coefficient.

(specific viscosity: $\eta_{sp}$)

The specific viscosity ($\eta_{sp}$) of the copolycarbonate (1) is 0.23 to 0.60, preferably 0.25 to 0.55, more preferably 0.30 to 0.50, much more preferably 0.35 to 0.45. When the specific viscosity is lower than 0.23, the strength of an injection molded piece degrades and when the specific viscosity is higher than 0.60, injection moldability deteriorates disadvantageously.

The specific viscosity is obtained from a solution prepared by dissolving 0.7 g of the copolycarbonate in 100 ml of methylene chloride at 20°C by using an Ostwald viscometer.

$$\text{Specific viscosity } (\eta_{sp}) = (t - t_0)/t_0$$

["to" is the number of seconds required for the dropping of methylene chloride and "t" is the number of seconds required for the dropping of a sample solution]

The measurement of the specific viscosity may be carried out by the following procedure. The copolycarbonate is first dissolved in methylene chloride in an amount which is 20 to 30 times the weight of the copolycarbonate, soluble matter is collected by cerite filtration, the solution is removed, and the residue is fully dried to obtain a methylene chloride-soluble solid. The specific viscosity at 20°C is obtained from a solution prepared by dissolving 0.7 g of the solid in 100 ml of methylene chloride by using an Ostwald viscometer.

(glass transition temperature: Tg)

The glass transition temperature (Tg) of the copolycarbonate (1) is 90 to 150°C, preferably 100 to 140°C. When the glass transition temperature (Tg) is lower than 70°C and the copolycarbonate (1) is used as a molded product, especially an optical molded product, heat resistance becomes unsatisfactory disadvantageously. When the glass transition temperature (Tg) is higher than 160°C, injection moldability degrades disadvantageously.

The glass transition temperature (Tg) is measured at a temperature elevation rate of 20°C/min by using the 2910 DSC of TA Instruments Japan.

(saturation water absorption coefficient)

The saturation water absorption coefficient of the copolycarbonate (1) is not more than 2.5 %, preferably not more than 2.2 %, more preferably not more than 2.0 %. When the saturation water absorption coefficient is higher than 2.5 %, the deterioration of various physical properties such as a dimensional change and warpage caused by the water absorption of a molded product becomes noticeable disadvantageously.

The relationship between the glass transition temperature (Tg°C) and the water absorption coefficient (Wa%) of the copolycarbonate (1) satisfies preferably the following expression (I), more preferably the following expression (I-a). When the following expression (I) is satisfied, a copolycarbonate having excellent heat resistance and a low water absorption coefficient is obtained advantageously. Although the upper limit of the TW value is not particularly limited, a TW value of not more than 10 suffices.

$$2.5 \leqq \text{TW value} = \text{Tg} \times 0.04 - \text{Wa} \qquad \text{(I)}$$

$$2.6 \leqq \text{TW value} = \text{Tg} \times 0.04 - \text{Wa} \qquad \text{(I-a)}$$

(pencil hardness)

The copolycarbonate (1) has a pencil hardness of at least F. The pencil hardness is preferably at least H as the copolycarbonate is excellent in scratch resistance. The pencil hardness can be enhanced by increasing the content of the recurring unit (B1) based on the total of all the recurring units. In the present invention, the pencil hardness is such hardness that when the copolycarbonate (1) is rubbed with a pencil having specific pencil hardness, no scratch mark is left, and pencil hardness used in the surface hardness test of a film which can be measured in accordance with JIS K-5600 is used as an index. The pencil hardness becomes lower in the order of 9H, 8H, 7H, 6H, 5H, 4H, 3H, 2H, H, F, HB, B, 2B, 3B, 4B, 5B and 6B, 9H is the hardest, and 6B is the softest.

(low-temperature planar impact)

The copolycarbonate (1) is excellent in low-temperature impact resistance as the fracture morphology of low-temperature planar impact becomes ductile fracture. As for low-temperature planar impact resistance, when a 2 mm-thick square plate is used to carry out a high-speed impact test with a high-speed impact tester at a testing temperature of -20°C, a testing speed of 7 m/sec, a striker diameter of 1/2 inch and a receptor diameter of 1 inch, the probability that the fracture morphology becomes brittle fracture is not more than 50 %. The probability is preferably not more than 40 %, more preferably not more than 30 %, particularly preferably not more than 20 %, most preferably not more than 15 %.

The 50 % breaking energy is not less than 20 J, preferably not less than 25 J, more preferably not less than 30 J, particularly preferably not less than 35 J. When the probability that the fracture morphology of low-temperature planar impact becomes brittle fracture is more than 50 % and when the 50 % breaking energy is less than 20 J, it may be difficult to use the copolycarbonate (1) in cold districts.

The copolycarbonate (1) has a 50 % breaking energy in a -20°C falling weight impact test of not less than 20 J and a brittle fracture rate of not more than 50 %.

(dynamic viscoelasticity)

The copolycarbonate (1) has a temperature ($T_{max}$) at which tanδ for the measurement of dynamic viscoelasticity becomes the highest of preferably -73°C or lower, more preferably -78°C or lower, much more preferably -79°C or lower, most preferably -80°C or lower.

(impurities)

The content of the monohydroxy compound in the copolycarbonate (1) is preferably not more than 700 ppm, more preferably not more than 500 ppm, particularly preferably not more than 200 ppm in a reaction solution at the final outlet of a polymerization reactor. The concentration of the diester carbonate in the copolycarbonate (1) is preferably not more than 200 ppm by weight, more preferably not more than 100 ppm by weight, particularly preferably not more than 60 ppm by weight, most preferably not more than 30 ppm by weight. The amounts of these impurities can be reduced by controlling the vacuum degree of the polymerization reaction.

(others)

The copolycarbonate (1) may be mixed with additives such as a heat stabilizer, plasticizer, optical stabilizer, polymerization metal inactivating agent, flame retardant, lubricant, antistatic agent, surfactant, antibacterial agent, ultraviolet absorbent and release agent as required according to purpose. The copolycarbonate (1) may be used in combination with another resin as long as the effect of the present invention is not impaired.

<molded article>

Molded articles obtained from the copolycarbonate (1) are formed by an arbitrary method such as an injection molding, compression molding, extrusion molding or solution casting method. Since the copolycarbonate (1) is excellent in moldability and heat resistance, it can be used as various molded articles. Especially, it can be advantageously used as a structural material for optical parts such as optical lenses, optical disks, liquid crystal panels, optical cards, sheets, films, optical fibers, connectors, vapor-deposition plastic reflection mirrors and displays and as a molded article suitable for use in electric and electronic parts such as the exteriors and front panels of personal computers and mobile phones, for automobile applications such as car head lamps and windows, for general applications such as cards and miscellaneous goods and for functional materials.

<film>

A film obtained from the copolycarbonate (1) may be used as a surface protection film, decorating film, front panel, phase difference film, plastic cell substrate film, polarizer protection film, antireflection film, luminance increasing film, optical disk protection film or diffusion film.

To produce an optical film, known methods such as solution casting, melt extrusion, thermal press and calender methods may be employed. Out of these, solution casting and melt extrusion methods are preferred, and the melt extrusion method is particularly preferred from the viewpoint of productivity.

In the melt extrusion method, the copolycarbonate (1) is preferably extruded by using a T die and supplied to a cooling roll. At this point, the temperature which is determined by the molecular weight, Tg and melt flow property of the copolycarbonate (1), is preferably 180 to 350°C, more preferably 200 to 320°C. When the temperature is lower than 180°C, viscosity becomes high, whereby the orientation and stress distortion of the polymer tend to remain disadvantageously. When the temperature is higher than 350°C, problems such as thermal deterioration, coloration and a die line from the T die tend to occur.

Since the copolycarbonate (1) has high solubility in an organic solvent, the solution casting method can also be employed. In the case of the solution casting method, methylene chloride, 1,2-dichloroethane, 1,1,2,2-tetrachloroethane, dioxolan and dioxane are preferably used as solvents. The content of the residual solvent in the film obtained by the solution casting method is preferably not more than 2 wt%, more preferably not more than 1 wt%. When the content of the residual solvent is higher than 2 wt%, the reduction of the glass transition temperature of the film becomes marked, which is not preferred from the viewpoint of heat resistance.

The thickness of an unstretched film obtained from the copolycarbonate (1) is preferably 30 to 400 μm, more preferably 40 to 300 μm. To obtain a phase difference film by stretching the unstretched film, the thickness of the

unstretched film may be suitably determined from among the above range in consideration of the desired phase difference value and the thickness of the optical film.

## EXAMPLES

The following examples are provided for the purpose of further illustrating the present invention but are in no way to be taken as limiting. "Parts" in the examples means "parts by weight". The resins and the evaluation methods used in the examples are as follows.

1. Polymer composition ratio (NMR)

Each recurring unit was measured by the proton NMR of JNM-AL400 of JEOL Ltd. to calculate the polymer composition ratio (molar ratio).

2. Measurement of specific viscosity

The specific viscosity was obtained from a solution prepared by dissolving 0.7 g of the polycarbonate resin in 100 ml of methylene chloride at 20°C by using an Ostwald viscometer.

$$\text{Specific viscosity } (\eta_{sp}) = (t - t_0)/t_0$$

["to" is the number of seconds required for the dropping of methylene chloride and "t" is the number of seconds required for the dropping of a sample solution]

3. Measurement of glass transition temperature (Tg)

The glass transition temperature (Tg) was measured at a temperature elevation rate of 20°C/min in a nitrogen atmosphere (nitrogen flow rate: 40 ml/min) by using 8 mg of the polycarbonate resin and the DSC-2910 thermal analyzing system of TA Instruments Japan in accordance with JIS K7121.

4. Water absorption coefficient

The water absorption coefficient was obtained from the following equation by measuring the weight of a cast film having a thickness of 200 μm obtained by dissolving a polycarbonate resin pellet in methylene chloride and evaporating methylene chloride after it was dried at 100°C for 12 hours and immersed in 25°C water for 48 hours.

$$\text{Water absorption coefficient (\%)} = \{(\text{weight of resin after water absorption} - \text{weight of resin before water absorption})/\text{weight of resin before water absorption}\} \times 100$$

5. TW value

The TW value was obtained from the following equation.

$$\text{TW value} = \text{glass transition temperature (Tg)} \times 0.04 - \text{water absorption coefficient (Wa)}$$

6. Pencil hardness

The pellet was molded into a 2 mm-thick square plate at a cylinder temperature of 250°C and a mold temperature of 80°C at a 1-minute cycle by using the J85-ELIII injection molding machine of The Japan Steel Works, Ltd. to measure the pencil hardness of this test specimen in accordance with the substrate testing method of JIS K5600.

7. Measurement of dynamic viscoelasticity

After the obtained resin was dried in vacuum at 100°C for 24 hours, it was molded into a 2 mm-thick plate by using the 75-ton molding machine (JSW J-75EIII) of JSW. The dynamic viscoelasticity of the molded specimen was measured under following conditions to obtain a temperature (Tmax: °C) at which the loss tangent (tanδ) became maximum.

Name of apparatus: RDAIII of TA Instruments Japan
Specimen: 2.0 mm in thickness x 12.0 mm in width
Measurement temperature: -200 to 100°C
Temperature elevation rate: 2°C/min
Frequency: 10 Hz

8. Low-temperature planar impact

A 2 mm-thick square plate was used to carry out a low-temperature planar impact test 10 times at a testing temperature of -20°C, a testing speed of 7 m/sec, a striker diameter of 1/2 inch and a receptor diameter of 1 inch by using the SHIMADZU HYDROSHOTHITS-P10 high-speed impact tester (of Shimadzu Corporation) to evaluate the probability that the specimen became fragile and 50 % breaking energy (average value).

9. Number average molecular weight of polycarbonate oligomer

The polycarbonate copolymer was dissolved in $CDCl_3$ to calculate the number of terminal hydroxyl groups, the number of terminal phenyl groups and the average number of recurring units by the proton NMR of JNM-AL400 of JEOL Ltd. so as to obtain the number average molecular weight of the polycarbonate oligomer.

Number average molecular weight of polycarbonate oligomer = (integrated value of signals of recurring unit)/(integrated value of signals of terminal hydroxyl group + integrated value of signals of terminal phenyl group) x 2 x molecular weight of recurring unit

10. Average number of repetitions and number average molecular weight of unit (B) in polycarbonate copolymer

The polycarbonate copolymer was dissolved in $CDCl_3$ to be measured by $^{13}C$-NMR of JNM-AL400 of JEOL Ltd. The signal of ISS (isosorbide)-ISS carbonate is measured at 153 to 154 ppm, the signal of ISS-copolymerization diol is generally measured at 154 to 155 ppm, and the signal of copolymerization diol-copolymerization diol is generally measured at 155 to 156 ppm. The average number of repetitions was calculated from the integrated values of these signals. The number average molecular weight of the average recurring unit (B) was obtained by multiplying the average number of repetitions with the molecular weight of the recurring unit.

Average number of repetitions of unit (B) = integrated value of signals of ([unit (B) - unit (B)]/integrated value of signals of [unit (A) - unit (B)] x 2 + 1

11. Weight average molecular weight of polyester diol

The weight average molecular weight of the polyester diol was measured by gel permeation chromatography.

Example 1

436 parts of isosorbide (to be abbreviated as ISS hereinafter), 65 parts of 1, 8-octanediol (to be abbreviated as OD hereinafter), 750 parts of diphenyl carbonate (to be abbreviated as DPC hereinafter), and $0.8 \times 10^{-2}$ part of

tetramethylammonium hydroxide and $0.6 \times 10^{-4}$ part of sodium hydroxide as catalysts were heated at 180°C in a nitrogen atmosphere to be molten. Thereafter, the pressure was reduced to 13.4 kPa over 30 minutes. Then, the temperature was raised to 250°C at a rate of 60°C/hr and kept at that temperature for 10 minutes, and the pressure was further reduced to 133 Pa or lower over 1 hour. A reaction was carried out under agitation for a total of 6 hours, and the reaction product was discharged from the bottom of a reactor under nitrogen increased pressure and cut by a pelletizer while it was cooled in a water tank to obtain a pellet after the end of the reaction. The evaluation results are shown in Table 1.

Example 2

The same operation and the same evaluations as in Example 1 were carried out except that 441 parts of ISS, 66 parts of 1, 9-nonanediol (to be abbreviated as ND hereinafter) and 750 parts of DPC were used as raw materials. The results are shown in Table 1.

Example 3

The same operation and the same evaluations as in Example 2 were carried out except that 71 parts of 1,10-decanediol (to be abbreviated as DD hereinafter) was used in place of ND. The results are shown in Table 1.

Example 4

The same operation and the same evaluations as in Example 2 were carried out except that 71 parts of 1, 12-dodecanediol (to be abbreviated as DDD hereinafter) was used in place of ND. The results are shown in Table 1.

Comparative Example 1

The same operation and the same evaluations as in Example 1 were carried out except that 501 parts of ISS and 749.7 parts of DPC were used as raw materials. The results are shown in Table 1.

Comparative Example 2

The same operation and the same evaluations as in Example 1 were carried out except that 376 parts of ISS, 65 parts of 1,3-propanediol (to be abbreviated as PD hereinafter) and 750 parts of DPC were used as raw materials. The results are shown in Table 1.

Comparative Example 3

The same operation and the same evaluations as in Example 1 were carried out except that 400 parts of ISS, 72 parts of 1,5-pentanediol (to be abbreviated as PeD hereinafter) and 750 parts of DPC were used as raw materials. The results are shown in Table 1.

Comparative Example 4

The same operation and the same evaluations as in Example 1 were carried out except that 425 parts of ISS, 61 parts of 1, 6-hexanediol (to be abbreviated as HD hereinafter) and 750 parts of DPC were used as raw materials. The results are shown in Table 1.

Comparative Example 5

436 parts of ISS, 65 parts of OD, 750 parts of DPC, and $0.8 \times 10^{-2}$ part of tetramethylammonium hydroxide and $0.6 \times 10^{-4}$ part of sodium hydroxide as catalysts were heated at 180°C in a nitrogen atmosphere to be molten. Thereafter, the pressure was reduced to 13.4 kPa over 30 minutes. Then, the temperature was raised to 250°C at a rate of 60°C/hr and kept at that temperature for 10 minutes, and the pressure was further reduced to 133 Pa or lower over 1 hour. A reaction was carried out under agitation for a total of 3 hours, and the reaction product was discharged from the bottom of a reactor under nitrogen increased pressure and cut by a pelletizer while it was cooled in a water tank to obtain a pellet after the end of the reaction. The evaluation results are shown in Table 1.

Comparative Example 6

The same operation and the same evaluations as in Example 1 were carried out except that 488 parts of ISS, 20 parts of OD and 750 parts of DPC were used as raw materials. The results are shown in Table 1.

Comparative Example 7

The same operation and the same evaluations as in Example 1 were carried out except that 376 parts of ISS, 132 parts of OD and 750 parts of DPC were used as raw materials. The results are shown in Table 1.

Table 1

| | Composition | | Specific viscosity | Tg | Water Absorption Coefficient | TW value | Pencil hardness | Dynamic viscoelasticity | Low-temperature impact test | |
|---|---|---|---|---|---|---|---|---|---|---|
| | | | | | | | | | Brittle probability | Energy |
| | | | | °C | % | | | Tmax °C | % | J |
| Ex. 1 | ISS/OD | 87/13 | 0.403 | 120 | 1.9 | 2.9 | H | -79 | 40 | 22 |
| Ex. 2 | ISS/ND | 89/11 | 0.401 | 121 | 1.8 | 3.0 | H | -90 | 0 | 48 |
| Ex. 3 | ISS/DD | 89/11 | 0.394 | 119 | 1.8 | 3.0 | H | -89 | 10 | 43 |
| Ex. 4 | ISS/DDD | 90/10 | 0.398 | 120 | 1.7 | 3.1 | H | -89 | 10 | 45 |
| C.Ex.1 | ISS | 100 | 0.394 | 160 | 5.3 | 1.1 | H | - | 100 | 2 |
| C.Ex.2 | ISS/PD | 75/25 | 0.382 | 116 | 2.4 | 2.2 | F | -48 | 100 | 4 |
| C.Ex.3 | ISS/PeD | 80/20 | 0.391 | 125 | 2.8 | 2.2 | F | -68 | 100 | 3 |
| C.Ex.4 | ISS/HD | 85/15 | 0.383 | 125 | 3.0 | 2.0 | H | -72 | 100 | 6 |
| C.Ex.5 | ISS/OD | 87/13 | 0.224 | 119 | 1.9 | 2.9 | H | -79 | 10.0 | 2 |
| C.Ex.6 | ISS/OD | 96/4 | 0.393 | 148 | 3.0 | 2.9 | H | -76 | 90 | 5 |
| C.Ex.7 | ISS/OD | 74/26 | 0.385 | 80 | 1.1 | 2.1 | HB | -80 | 40 | 23 |

Ex.:Example C.Ex.:Comparative Example
ISS: isosorbide OD: 1,8-octanediol
ND: 1,9-nonanediol DD: 1,10-decanediol
DDD: 1,12-dodecanediol PD: 1,3-propanediol
PeD: 1,5-pentanediol HD: 1,6-hexanediol

Effect of the Invention

The copolycarbonate (1) of the present invention has a low water absorption coefficient and is excellent in heat resistance, low-temperature characteristics and surface hardness.

Industrial Applicability

The copolycarbonate (1) of the present invention is useful as a member for OA, electric and electronic equipment, automobiles and others.

## Claims

1. A copolycarbonate (1) which contains a unit (A) represented by the following formula and a unit (B1) represented by the following formula as main recurring units, the (A/B1) molar ratio of the unit (A) and the unit (B1) being 80/20 to 95/5, and satisfies the following requirements (i) to (v):

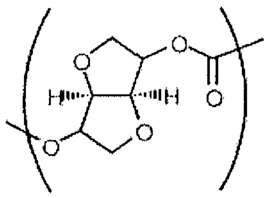

(A)

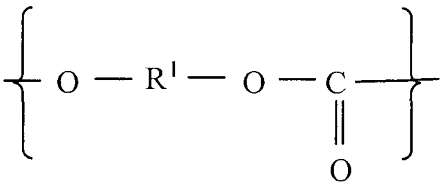

(B1)

($R^1$ is an alkylene group having 8 to 12 carbon atoms which may be substituted by an aromatic group having 6 to 12 carbon atoms.)

(i) the specific viscosity measured from a 20°C methylene chloride solution should be 0.23 to 0.60;
the specific viscosity being obtained from a solution prepared by dissolving 0.7 g of the copolycarbonate in 100 ml of methylene chloride at 20°C by using an Ostwald viscometer and calculated according to the following equation:

$$\text{Specific viscosity } (\eta_{sp}) = (t - t_0)/t_0$$

wherein "to" is the number of seconds required for the dropping of methylene chloride and "t" is the number of seconds required for the dropping of a sample solution;
(ii) the glass transition temperature should be 90 to 150°C;
the glass transition temperature (Tg) being measured by DSC at a temperature elevation rate of 20°C/min;
(iii) the saturation water absorption coefficient should be not more than 2.5 %;
the water absorption coefficient (Wa) being obtained from the following equation by measuring the weight of a cast film having a thickness of 200 μm obtained by dissolving a polycarbonate resin pellet in methylene chloride and evaporating methylene chloride after it was dried at 100°C for 12 hours and immersed in 25°C water for 48 hours:

Water absorption coefficient (%) = {(weight of resin after water absorption - weight of resin before water absorption)/weight of resin before water absorption} x 100;

(iv) the pencil hardness should be at least F;
the pencil hardness being such hardness that when the copolycarbonate is rubbed with a pencil having specific pencil hardness, no scratch mark is left, and the pencil hardness used in the surface hardness test of a film being measured in accordance with JIS K-5600;
(v) the 50 % breaking energy measured by a falling weight impact test at -20°C should be not less than 20 J and the brittle fracture rate should be not more than 50 %; as determined using a 2 mm-thick square plate to carry out a low-temperature planar impact test 10 times at a testing temperature of -20°C, a testing speed of 7 m/sec, a striker diameter of 1.27 cm (1/2 inch) and a receptor diameter of 2.54 cm (1 inch) to evaluate the probability that the specimen becomes fragile and 50 % breaking energy (average value).

**2.** The copolycarbonate (1) according to claim 1, wherein the relationship between the glass transition temperature (Tg°C) and the water absorption coefficient (Wa%) satisfies the following expression (I).

$$2.5 \leqq \text{TW value} = Tg \times 0.04 - Wa \qquad (I)$$

**3.** The copolycarbonate (1) according to claim 1, wherein the temperature ($T_{max}$) at which the loss tangent (tanδ) obtained by the measurement of dynamic viscoelasticity becomes maximum is -73°C or lower;
wherein the measurement of dynamic viscoelasticity is carried out as follows: the resin is dried in vacuum at 100°C for 24 hours and molded into a 2 mm-thick plate by using a 75-ton molding machine; the dynamic viscoelasticity of the molded specimen is measured under the following conditions to obtain the temperature (Tmax: °C) at which the loss tangent (tanδ) becomes maximum:

Specimen: 2.0 mm in thickness x 12.0 mm in width
Measurement temperature: -200 to 100°C
Temperature elevation rate: 2°C/min
Frequency: 10 Hz.

**4.** A molded article obtained from the copolycarbonate of any one of claims 1 to 3.

## Patentansprüche

**1.** Copolycarbonat (1), welches enthält: eine Einheit (A) der folgenden Formel und eine Einheit (B1) der folgenden Formel als Hauptwiederholungseinheiten, wobei das molare Verhältnis (A/B1) der Einheit (A) und der Einheit (B1) 80/20 bis 95/5 beträgt, und den folgenden Erfordernissen (i) bis (v) genügt wird:

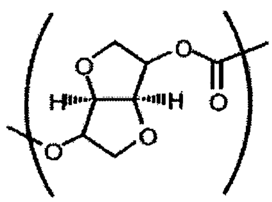

(A)

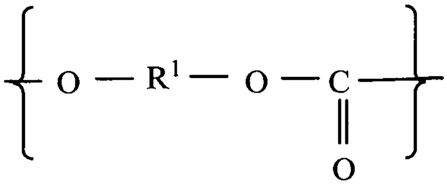

(B1)

($R^1$ ist eine Alkylengruppe mit 8 bis 12 Kohlenstoffatomen, die substituiert sein kann mit einer aromatischen Gruppe mit 6 bis 12 Kohlenstoffatomen.)

(i) die spezifische Viskosität, gemessen anhand einer Methylenchloridlösung bei 20°C, sollte 0,23 bis 0,60 betragen;
die spezifische Viskosität wird dabei erhalten anhand einer Lösung, die hergestellt wird durch Auflösen von 0,7 g des Copolycarbonats in 100 ml Methylenchlorid bei 20°C, unter Verwendung eines Ostwald-Viskosimeters und wird berechnet gemäß der folgenden Gleichung:

$$\text{Spezifische Viskosität } (\eta_{sp}) = (t - t_0)/t_0$$

wobei "$t_0$" die Anzahl der Sekunden ist, die benötigt wird für das Tropfen des Methylenchlorids und "t" die Anzahl der Sekunden ist, die benötigt wird für das Tropfen einer Probelösung;
(ii) die Glasübergangstemperatur sollte 90 bis 150°C betragen;
wobei die Glasübergangstemperatur (Tg) gemessen wird durch DSC bei einer Temperaturanstiegsgeschwindigkeit von 20°C/min;
(iii) der Sättigungswasserabsorptionskoeffizient sollte nicht mehr als 2,5% betragen;
wobei der Wasserabsorptionskoeffizient (Wa) erhalten wird anhand der folgenden Gleichung durch Messen des Gewichts eines gegossenen Films mit einer Dicke von 200 μm, erhalten durch Auflösen eines Polycarbonatharzpellets in Methylenchlorid und Verdampfen des Methylenchlorids, nachdem er getrocknet worden ist bei 100°C für 12 Stunden, und 48 Stunden lang bei 25°C in Wasser eingetaucht worden ist:

Wasserabsorptionskoeffizient (%) = {(Gewicht des Harzes nach der Wasserabsorption - Gewicht des Harzes vor der Wasserabsorption)/Gewicht des Harzes vor der Wasserabsorption} x 100;

(iv) die Bleistifthärte sollte mindestens F betragen;
wobei die Bleistifthärte diejenige Härte ist, bei der, wenn das Copolycarbonat mit einem Bleistift mit einer spezifischen Bleistifthärte berieben wird, keine Kratzer verbleiben und wobei die in dem Oberflächenhärtetest eines Films verwendete Bleistifthärte gemessen wird gemäß JIS K-5600;
(v) die 50%-Bruchenergie, gemessen durch einen Schlagtest mit einem fallenden Gewicht bei -20°C, sollte nicht weniger als 20 J betragen und die spröde Bruchrate sollte nicht mehr als 50% betragen;
bestimmt unter Verwendung einer 2 mm dicken quadratischen Platte, um einen planaren Stoßtest bei niedriger Temperatur zehnmal durchzuführen, und zwar bei einer Testtemperatur von -20°C, einer Testgeschwindigkeit von 7 m/s, einem Schlagkörperdurchmesser von 1,27 cm (1/2 Zoll) und einem Aufnehmerdurchmesser von 2,54 cm (1 Zoll), um die Wahrscheinlichkeit zu bestimmen, dass die Probe brüchig wird, und 50% Bruchenergie (Durchschnittswert).

**2.** Copolycarbonat (1) nach Anspruch 1, wobei die Beziehung zwischen der Glasübergangstemperatur (Tg°C) und dem Wasserabsorptionskoeffizienten (Wa%) dem folgenden Ausdruck (I) genügt.

$$2,5 \leqq \text{TW-Wert} = Tg \times 0,04 - Wa \qquad (I)$$

**3.** Copolycarbonat (1) nach Anspruch 1, wobei die Temperatur ($T_{max}$), bei der der Verlust-Tangens (tanδ), erhalten durch die Messung der dynamischen Viskoelastizität, maximal wird, -73°C oder weniger beträgt;
wobei die Messung der dynamischen Viskoelastizität wie folgt durchgeführt wird: das Harz wird im Vakuum bei 100°C 24 Stunden lang getrocknet und zu einer 2 mm dicken Platte geformt unter Verwendung einer 75-Tonnen-Formmaschine; die dynamische Viskoelastizität der geformten Probe wird gemessen unter den folgenden Bedingungen, um die Temperatur (Tmax:°C) zu erhalten, bei der der Verlust-Tangens (tanδ) maximal wird:

Probe: 2,0 mm in der Dicke x 12,0 mm in der Breite
Messtemperatur: -200 bis 100°C
Temperaturanstiegsgeschwindigkeit: 2°C/min
Frequenz: 10 Hz.

**4.** Geformter Gegenstand, erhalten aus dem Copolycarbonat nach einem der Ansprüche 1 bis 3.

## Revendications

**1.** Copolycarbonate (1) qui contient un motif (A) représenté par la formule suivante et un motif (B1) représenté par la formule suivante en tant que motifs récurrents principaux, le rapport molaire (A/B1) entre le motif (A) et le motif (B1) étant de 80/20 à 95/5, et satisfait les exigences (i) à (v) suivantes :

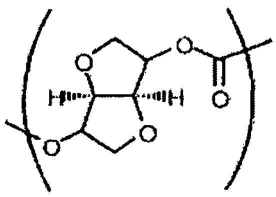

(A)

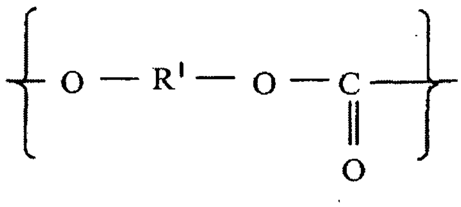

(B1)

($R^1$ est un groupe alkylène comportant 8 à 12 atomes de carbone qui peut être substitué par un groupe aromatique comportant 6 à 12 atomes de carbone.)

(i) la viscosité spécifique mesurée à partir d'une solution de chlorure de méthylène à 20 °C devrait être de 0,23 à 0,60 ;
la viscosité spécifique étant obtenue à partir d'une solution préparée en dissolvant 0,7 g du copolycarbonate dans 100 ml de chlorure de méthylène à 20 °C à l'aide d'un viscosimètre Ostwald et calculée selon l'équation suivante :

$$\text{Viscosité spécifique } (\eta_{sp}) = (t - t_0)/t_0$$

dans laquelle « $t_0$ » est le nombre de secondes requises pour le goutte-à-goutte du chlorure de méthylène et « t » est le nombre de secondes requises pour le goutte-à-goutte d'une solution d'échantillon ;
(ii) la température de transition vitreuse devrait être de 90 à 150 °C ;
la température de transition vitreuse (Tg) étant mesurée par DSC à une vitesse d'élévation de température de 20 °C/min ;
(iii) le coefficient d'absorption d'eau de saturation ne devrait pas être supérieur à 2,5 % ;
le coefficient d'absorption d'eau (Wa) étant obtenu à partir de l'équation suivante en mesurant le poids d'un film de coulée ayant une épaisseur de 200 μm obtenu en dissolvant une pastille de résine de polycarbonate

dans du chlorure de méthylène et en évaporant le chlorure de méthylène après séchage à 100 °C pendant 12 heures et immersion dans de l'eau à 25 °C pendant 48 heures :

Coefficient d'absorption d'eau (%) = {(poids de résine après absorption d'eau - poids de résine avant absorption d'eau)/poids de résine avant absorption d'eau} x 100 ;

(iv) la dureté au crayon devrait être d'au moins F ;
la dureté au crayon étant une dureté telle que, lorsque le copolycarbonate est gommé avec un crayon ayant une dureté au crayon spécifique, aucune trace ne reste, et la dureté au crayon utilisée dans l'essai de dureté de surface d'un film étant mesurée en conformité avec la norme JIS K-5600 ;
(v) l'énergie de rupture à 50 % mesurée par un essai de résistance au choc à -20 °C ne devrait pas être inférieure à 20 J et le taux de rupture fragile ne devrait pas être supérieur à 50 % ;

comme mesurée en utilisant une plaque carrée avec une épaisseur de 2 mm pour réaliser un essai de résistance au choc plan à basse température 10 fois à une température d'essai de -20 °C, une vitesse d'essai de 7 m/s, un diamètre de frappeur de 1,27 cm (1/2 pouce) et un diamètre de récepteur de 2,54 cm (1 pouce) pour évaluer la probabilité que l'éprouvette devienne fragile et une énergie de rupture à 50 % (valeur moyenne).

2. Copolycarbonate (1) selon la revendication 1, dans lequel la relation entre la température de transition vitreuse (Tg °C) et le coefficient d'absorption d'eau (Wa %) satisfait l'expression (I) suivante :

$$2,5 \leqq \text{Valeur TW} = Tg \times 0,04 - Wa \quad (I)$$

3. Copolycarbonate (1) selon la revendication 1, dans lequel la température ($T_{max}$) à laquelle le facteur de dissipation (tanδ) obtenu par la mesure de viscoélasticité dynamique devient maximal est de -73 °C ou moins ;
dans lequel la mesure de viscoélasticité dynamique est réalisée comme suit : la résine est séchée sous vide à 100 °C pendant 24 heures et moulée en une plaque de 2 mm d'épaisseur à l'aide d'une machine à mouler de 75 tonnes ; la viscoélasticité dynamique de l'éprouvette moulée est mesurée dans les conditions suivantes pour obtenir la température (Tmax : °C) à laquelle le facteur de dissipation (tanδ) devient maximal :

éprouvette : 2,0 mm d'épaisseur x 12,0 mm de largeur
température de mesure : -200 à 100 °C
vitesse d'élévation de température : 2 °C/min
fréquence : 10 Hz.

4. Article moulé obtenu à partir du copolycarbonate de l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004111106 A
- JP 2008024919 A
- JP 2003292603 A
- JP 2002512268 B
- JP 2001180591 A
- WO 2005116110 A
- JP 2011105846 A
- EP 1752482 A1
- US 2009105393 A1
- WO 2011021720 A